# EUROPEAN PATENT SPECIFICATION

(11) **EP 3 530 523 B1**
(45) Date of publication and mention of the grant of the patent: **03.06.2020**
(21) Application number: 19153745.5
(22) Date of filing: 25.01.2019
(51) Int. Cl.: B60R 1/074, B60R 1/076, F03G 7/06

(54) **REAR VIEW ELEMENT FOLDING DEVICE**
KLAPPVORRICHTUNG FÜR EIN RÜCKBLICKELEMENT
DISPOSITIF DE PLIAGE D'ÉLÉMENT DE VUE ARRIÈRE

(30) Priority: 22.02.2018 US 201815902055
(43) Date of publication of application: 28.08.2019
(73) Proprietor: SMR Patents S.à.r.l., 2453 Luxembourg (LU)
(72) Inventor: WIECZOREK, Romeo, 70327 Stuttgart (DE); HEIN, Peter, 70327 Stuttgart (DE); HERRMANN, Andreas, 70327 Stuttgart (DE); CZECHOWICZ, Alexander, 42859 Remscheid (DE)
(74) Representative: Weber-Bruls, Dorothée

(56) References cited:
- EP-A1- 0 405 773
- EP-A1- 2 781 743
- WO-A1-2017/088849
- JP-A- H07 291 032
- US-A- 4 626 085
- US-A- 4 728 181
- US-A1- 2011 222 176
- US-A1- 2017 268 489

## Description

### BACKGROUND OF THE INVENTION

This invention relates in general to rear view devices. In particular, the invention relates to a rear view element folding device for a motor vehicle for approaching at least one pivot position of an element housing relative to an element foot that can be mounted on the motor vehicle, and for locking or unlocking at least one resting position of the element housing relative to the element foot. The invention further relates to a method for triggering such a rear view element folding device.

A drive folding mechanism for a rear view element is known from EP 2 439 106 B1, which is designed to be attached to a motor vehicle. This mechanism comprises a drive folding housing, which can be mounted between an element housing and an element foot that can be mounted on a motor vehicle. Further, a coupling member is provided which is brought into engagement with the element foot using a first spring means, wherein the coupling detent can be axially moved from a locking position and/or engagement position, in which coupling arresting elements hold back a relative rotation between the coupling member and the element foot in a form-fit manner, and an unlocking and/or non-engagement position, in which a friction engagement torque only somewhat holds back the relative rotation between the coupling member and the element foot around an element head axis, wherein the coupling member permits the element housing to be manually moved in relation to the element foot. Additionally, the mechanism comprises an electrical drive train for generating a relative rotation between the drive folding housing and the coupling member around the element head axis, wherein when the coupling member is in the non-engagement position and the electrical drive train generates a relative rotation between the drive folding housing and the coupling member, the drive folding housing rotations relative to the element foot until a drive stop surface of a drive stop means achieves a detent includes counter-torque, wherein the counter-torque is greater than the friction engagement torque, and thus stops the rotation of the drive folding housing in relation to the element foot, and instead causes the coupling member to rotation until the coupling member has reached an engaged position. The drive stop means is movably mounted on the element foot, wherein the drive stop surface is biased axially towards the detent. The drive stop surface moves with the drive folding housing between:
a forward position, in which the drive folding housing and the element head are in a forward folding position;
a rearward position, in which the drive folding housing and the element head are in a rearward folding position; and
a drive position in which the drive folding housing and the element head are in an extended position, the coupling member is in the engagement position and the drive stop surface lies between the detent and the drive folding housing in order to provide a form-fit and repeatable stop.

The known rear view element folding device uses a single motor for changing between the engagement position and the non-engagement position, i.e. for locking and unlocking, as well as for approaching the forward position, rearward position and drive position, i.e. for twisting, which leads to a complex structure.

A mirror assembly described in US 2011/222176 A1 includes a reflective surface disposed within a housing, and an actuator in operative communication with at least a portion of the housing, wherein the actuator and/or housing comprises an active material element configured to cause or selectively enable the housing and surface to be manipulated.

To prevent excessive force accompanying the external force from being applied to a gear mechanism and the like by providing a positioning mechanism between a base member and a mirror housing, a clutch mechanism between a motor and the mirror housing, and a switch for stopping the motor and a means for changing over the rotation direction in the vicinity of the clutch mechanism are described in JP H07 291032 A. In detail, a motor stopping mechanism is constituted of a motor stopping switch and notch parts provided in a driving plate. In the upper surface part of the driving plate, projection parts for displacing a cam block for changing over reciprocal rotation change-over switches are provided to change over the direction of rotation of a motor. Also, the plural projection parts of a clutch are provided in a moved plate of the lower part of the driving plate to cut off the transmission of external force. An engaging recessed part is provided in a positioning mechanism for determining the used position and the unused position of a mirror device main body, and the force required for releasing its engagement is set smaller than that for releasing the engagement of a clutch mechanism to prevent the clutch mechanism from being released before the mirror housing is turned.

US 4,728,181 A refers to a shock absorbing apparatus for a door mirror of automobiles capable of absorbing a shock applied to the door mirror when a pedestrian or the like strikes the door mirror, by automatically rotating the door mirror; comprising an inner cylinder rotatably mounted on a supporting axis, and outer cylinder into which the inner cylinder can be received, and a shock absorbing member disposed between the inner cylinder and the outer cylinder, and fixed to the inner and outer cylinders respectively, the inner cylinder having a longer length in the axial direction than that of the outer cylinder, the supporting axis being disposed between upper and lower flanges mounted on either a door or a mirror case, both ends of the inner cylinder being fastened by the upper and lower flanges, and the outer cylinder being connected to the other provided with no flange.

WO 2017/088849 A1 relates to a pushing device for pushing a sliding door in a pushing direction in relation to a furniture body, comprising a housing and a driver that can be moved in relation to the housing, wherein the driver is part of a piston unit, which is guided in the housing and is loaded against the pushing direction by means of a spring, and wherein the spring can be loaded by means of a shape-memory element forming a Bowden cable. The invention further relates to a piece of furniture having such a device. The driver has a stop surface pointing in the pushing direction. The Bowden cable penetrates the piston unit, the spring, and the housing. In addition, the Bowden cable has a piston-unit-side end arranged outside of the piston unit and a housing-side end movable in relation to the piston-unit-side end and arranged outside of the housing, which ends can be connected to two poles of a current source. By means of the invention, an operationally reliable pushing device for a sliding door is developed.

The invention provides a rear view element folding device for a motor vehicle which has a simple structure, without reducing safety during locking. Large noise developments when approaching different positions of the rear view element should also be avoided. In addition, it should be possible to quickly approach any desired position.

### SUMMARY OF THE INVENTION

This invention relates to rear view element folding device for a motor vehicle for approaching at least one rotational position of an element housing relative to an element foot that can be mounted on the motor vehicle, and for locking or unlocking at least one resting position of the element housing relative to the element foot, in line with claim 1.

Preferred embodiments of the invention are described in claims 2 to 12.

A method for controlling the rear view element folding device according to the invention may be provided in that the travel path of the first actuator in the form of an SMA actuator is set using a temperature and/or resistance regulation and/or using the sensor device, and/or the travel path of the second actuator is set using a temperature and/or resistance regulation and/or using the sensor device, and/or the control and regulating device sets a current source for applying current impulses to the first and/or second actuator, preferably depending on stored and/or self-learned pulse sequences.

The invention uses two actuators, namely one for a locking and/or unlocking, and another for a rotation of an element housing relative to an element foot in a rear view element of a motor vehicle. This hybrid form not only leads to a simple structure, but also to reduction in noise and an increase in adjustment speed or folding up speed, simultaneously with an unreduced service life.

As described herein, according to at least one embodiment when at least the actuator, which carries out an unlocking, uses at least one shape memory element (SMA element) and thus is an SMA actuator. An SMA element such as an SMA wire or an SMA spring, actually can namely be heated via a drive current surge so that it contracts and can itself act against the force of a spring element while contracting in order to release a lock which is secured by the spring element, preferably in a form-fit manner. Then in a cooling down phase, in which the SMA element returns to its original length, the spring element can also return to its original position in which it secures a lock, which in the case of a form-fit connection can also withstand relatively large forces. Only in the unlocked state, in which the spring element does not enforce a lock, a rotation can be conducted via the second actuator. This rotation can be enabled by means of any drive, for example again via an SMA actuator or a standard electromotor.

According to the invention, the second actuator comprises a Bowden cable with an inner cable comprising an active material, in particular a shaped memory alloy, wherein the inner cable connects the first engagement element to the element foot. This allows for a particularly compact construction of the rear view element folding device, as a Bowden cable requires significantly less space than for example an electric motor. Moreover, a Bowden cable can be used to directly drive the folding motion without the need for additional gears or the like.

The controlling of both actuators can occur in dependence on output values of sensors, on the one hand for the precise setting of the respective movement, i.e. the translation movement of the first actuator and the rotational movement of the second actuator. On the other hand, the sensors also make it possible to react to external circumstances, such as for example an obstacle close to a rear view element. If for example an obstacle is captured on the passenger side, the rear view element on the passenger side can quickly be folded up to the motor vehicle via the rear view element folding device according to the invention, in order to avoid a damage occurring. Such a folding-up is also possible on the drive side, although coupled with a driving speed, for example up to a speed of 6 km per hour, which is generally associated with parking or reversing out of a parking space. However, folding up in reaction to captured vibrations, caused either by a driving motion per se or by the area surrounding the motor vehicle, for example in cases of bad weather is also possible with a rear view element folding device according to the invention.

In a further preferred embodiment, the at least one sensor device is a resistance sensor detecting an inner resistance of an SMA element of the first and/or second actuator.

The internal structural change of an SMA element is directly related to further physical properties, such as the resistance. For this reason, the state of an SMA actuator can be reliably monitored by a resistance measurement without the need for any further sensors.

Since the resistance sensor can be easily integrated into the circuit controlling the SMA actuator, this is a particularly compact arrangement.

In a further preferred embodiment, the at least one sensor device comprises a micro switch and/or an electrical contact surface which is actuated when the first and second engagement element are engaged in the locking position.

This is an alternative, compact and efficient sensor setup. The micro switch or contact surface can for example be directly integrated into the engagement elements, thus allowing for a direct monitoring of their engagement stage. This embodiment provides very fast reaction times regarding the sensing of the actuator states and consequently minimizes unnecessary control actions, which, for example, could reduce the life time of an SMA actuator.

Various aspects of this invention will become apparent to those skilled in the art from the following detailed description of the preferred embodiment, when read in light of the accompanying drawings.

### BRIEF DESCRIPTION OF THE DRAWINGS

FIG 1A is a profile view to a rear view element folding device in a locking position.
FIG 1B is a profile view to the rear view element folding device of FIG 1A, in an unlocking position.
FIG 1C is a profile view to the rear view element folding device of FIG 1B, when approaching a rotational position.
FIG 2 is a flow chart of an approach of a rotational position by means of the rear view element folding device as shown in FIGS. 1A-1C.
FIG 3A is a schematic representation of a micro switch for detecting the locking status of a further rear view element folding device, with a sensor.
FIG 3B is a schematic representation of the position of the micro switch according to FIG 3A within the engagement elements.
FIG 4 is a perspective representation of a Bowden cable actuator for a rear view element folding device according to the invention.
FIG 5 depicts a rear view element folding device with a drive motor in a perspective view.
FIG 6 is a perspective view of a rear view element folding device with a piezo actuator.
FIG 7 is a top-down representation of the rear view folding device with a piezo actuator.
FIG 8 is a further perspective representation of the rear view folding device according to FIG 6.

### DETAILED DESCRIPTION OF THE PREFERRED EMBODIMENTS

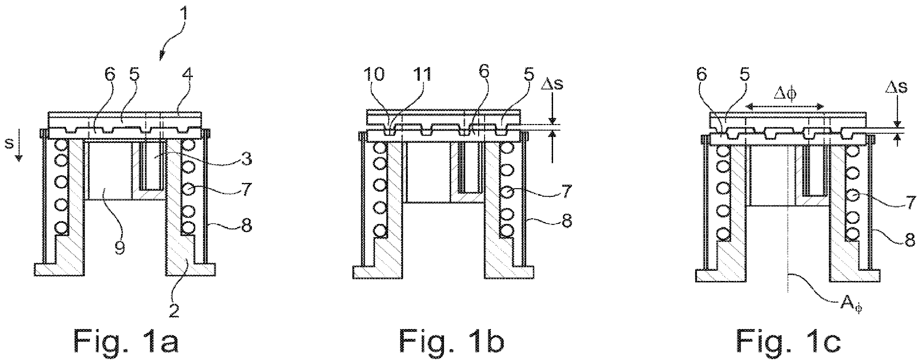

FIGS 1A to 1C show a rear view element folding device in form of a rear view mirror folding device 1, which uses a basic body 2 which is either provided by a mirror foot, not shown, or is firmly attached thereto, in order to support further elements. Thus, a drive motor 3 is arranged as part of an actuator for a rotational movement in the basic body 2 which comprises a hollow cylinder form, and is also a fixed there in order to engage a rotation element 4 via a gear stage, not shown, said rotation element for its part being attached to a mirror housing or mirror head, not shown, wherein a mirror element is provided in the mirror head. The rotation element 4 is firmly connected to an engagement element 5 or is formed with said element. According to FIG 1A, this engagement element 5 firmly engages with a further engagement element 6, when a locking position is adopted. Between the engagement element 6 and the basic body 2, a spring element 6 and the basic body 2, a spring element 7 is arranged concentrically to the basic body 2.

Around the spring element 7 runs concentrically a plurality of SMA wires 8 or an SMA wire, having several coils as part of a further actuator. Each SMA wire 8 here engages on the engagement element 6 on the one hand, and on the other hand on the basic body 2 as does the spring element 7.

In the locking position shown in FIG 1A, which represents a locked resting position, the spring element 7 presses the engagement element 6 onto the engagement element 5 for locking purposes. Here, trapezoid protrusions 10 on the engagement element 5 engage in complementary recesses 11 of the engagement element 6. The engagement elements 5, 6 can be formed a gear rings. The engagement elements 5, 6 can however also be formed as clamping, breaking or latching elements, i.e. also function as frictionally engaged brakes, for example.

If a mechanical torque is applied to the rotation element 4, due to the trapezoid form of the protrusion 10 and thus also of the recesses 11, the engagement between the two engagement elements 5, 6 can be released, whereby the spring element 7 is compressed. This is used for the so-called child's head test, which tests whether the rear view mirror folds away when a rear view mirror collides with a child's head.

If a current impulse is applied to the SMA wires 8, these heat up in contract as a result, so that the spring element 7 is compressed, as can be seen in FIG 1B. Here, a gap ΔS is opened along the translation direction S between the two engagement elements 5 and 6, and thus the engagement of the protrusions 10 on the recesses 11 is released, so that an unlocking occurs as is shown in FIG 1B. In other words, the contraction of the SMA wires 8 leads to an actuating power which is greater than the pressure force of the spring element 7. This leads to a decoupling of the engagement elements 5 and 6, so that the rotation element 4 together with the engagement element 5 is then only radially mounted around a guide counter of the basic body 2, while a linear displacement, i.e. a translation, of the rotation element 4 together with the engagement element 5 is no longer possible.

In the unlocked resting state shown in FIG 1B, it is possible to affect a rotation of the engagement element 5 relative to the engagement element 6 by switching on the drive motor 3, namely around the rotation axis AΦ by a certain rotation angle ΔΦ, is indicated in FIG 1C. The drive motor thus generates a low torque following activation, which is guided over the gear stage onto the engagement element 5 together with the rotation element 4, so that a rotation of these two parts occurs.

In order to monitor the travel path of the drive motor 3, a rotation angle sensor, such a potentiometer, a Hall effect sensor or also an induction sensor, can be used. Alternatively, it is also possible to query all positions by means of mechanical end switches.

For unlocking purposes, it is advantageous when a current is applied to all SMA wires 8 at the same time, preferably in each case with a brief current surge, so that an even unlocking does in fact take place. As soon as no further current is applied to the SMA wires 8, these wires cool down again, so that a renewed locking automatically occurs, since the SMA wires 8 expand respectively into their original length. In order to lengthen the time period of the unlocking procedure, several brief current surges can be applied to the SMA wires 8.

The travel path which acts to open the gap AS when the SMA wires 8 contract can occur in such a manner that it is controlled via a Hall effect sensor, a current control device, a resistance measurement or similar.

Instead of SMA wires, SMA tension springs can also be used, for example evenly distributed around the circumference of the spring element 7. The dimensioning of the force of the SMA actuator can be conducted over the number of SMA wires 8. The higher the required actuating force is, the more SMA wires are needed. Monitoring of the travel path of the SMA wires can be conducted via resistance regulation. Here, the change in electric resistance can be monitored via a measurement amplifier. These changes are significant with increasing ΔS. In case of critical resistance values or an identification of a certain gradient of the resistance changes over the time, a set stop point can automatically be determined. The recording of a set stop point can alternatively be achieved via a mechanical end switch. A two-position controller can record the signal of a stop point and in the logical state of the current source for the SMA wires can switch between a "heating" and "cooling" parameter by switching the current supply on and off.

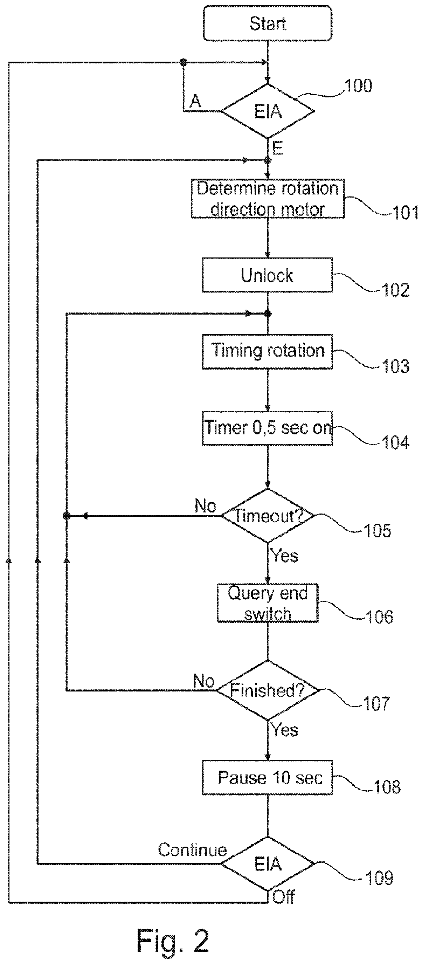

In FIG 2, the progress of a folding up procedure of a rear view element with a rear view element folding device 1 is again shown. In a first step 100, the device 1 is switches on and then in a second step 101 the rotation direction of the drive motor 3 required for folding down is determined. In a third step 102 an unlocking is effected via the SMA actuator, namely by applying a current pulse to each of the SMA wires 8, as shown in FIG 1B. Then, a rotation from the extended resting position into the folding down position is conducted via the drive motor 3, preferably in a timed manner, during a plurality of cycles, each with a duration of 0.5 sec, as indicated by the step sequence 103, 104 and 105.

In the same timing, further current impulses are applied onto the SMA wires 8, in order to keep them warm and thus shortened, so that an unlocking a guaranteed. If in a next step 106 a signal issued from a sensor in the form of e.g. an end switch that the desired end position has been achieved, the rotation is ended, as indicated by steps 107 and 108, so that finally, in step 109, the device 1 can be switched off.

If due to a termination of an application of current on the SMA wires 8 a cooling of said wires occurs, these SMA wires 8 contract, wherein the enforce a sliding in of the protrusions 10 into the recesses 11, so that the unlocking position according to FIG 1A is again taken up.

The SMA wires 8 can be kept "warm" at a first temperature by suitable application of current impulses, in order to be able to complete a certain rotation procedure. The SMA wires can be kept at a second temperature in order to still ensure a locking, but also to enable fast unlocking. In other words, via the setting of the temperature of the SMA wires 8 a control of the hybrid system of the rear view element folding device 1 can be effected.

Without being bound to theory, the fundamental basis for the behavior of the metallic SMA is provided by a reversible martensitic phase transformation; i.e. a high-temperature phase transforms into a low-temperature phase, with a change in the crystal structure. In the case of NiTi, the high- temperature phase is designated as austenite, and the low-temperature phase as martensite. A martensitic transformation has specific characteristic features. Since this involves a diffusionless cooperative shear movement of the lattice, it can take place even at temperatures well below the melting temperature. When measured in terms of the interatomic distances, the displacements produced by the shearing are comparatively small. Although the crystal structure changes, the short-range order of the lattice is not disturbed, and the closest neighbors are retained. This behavior can be checked by measurement techniques by way of the electrical resistance, or, conversely, as a result of this effect, a control system can be designed in such a way that the resistance is never so low that a transformation takes place for as long as the locking mechanism is to be held open. Thus, SMA wire can be used as a sensor.

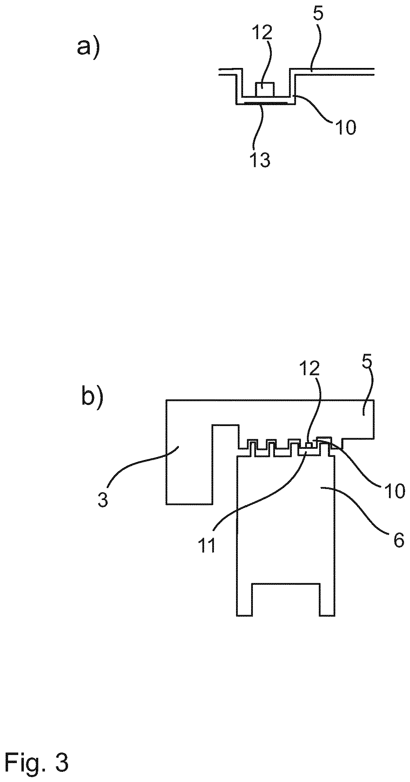

As shown in FIGS 3A and 3B, a sensor in form of a micro switch 12 can be used to monitor the locking state of the engagement elements 5, 6. The micro switch 12 is preferentially integrated into the protrusions 10 or recesses 11 of the engagement elements 5, 6. Alternatively, or in combination, a contact surface 13 can be employed to detect the locked or unlocked state, respectively.

This method is very reliable, in particular for applications with influencing temperatures from -40 to +85°C. The integration of such a micro switch 12 acting as a limit switch which is engaged at a defined path length secures the system to the extent that the folding device 1 remains open in a defined manner for as long as desired. If it is intended that the folding device 1 should cool off, a change of state of the wire 8 can be registered after path length changes of only 0.1 mm, and a new pulse can be caused to flow through the wire 8, which then immediately reengages the engaging elements 5, 6. Then, the resulting electrical contact can interrupt the current feed again, so that the wire 8 is kept at an optimal temperature. Ideally, the temperature to which the wire 8 is heated should lie exactly where the structural transformation of the SMA wire 8 takes place, namely at its martensite-austenite transition point. Furthermore, the exact regulation around the transition time has other advantages, including a particularly long service life of the SMA wire 8, shorter cooling periods during locking, and greater safety and reliability thanks to the direct relationship between movement, actuation of the micro switch 12 and the resulting current flow through the wire 8.

The same advantage can be achieved by employing a contact surface 13. In both cases, the contact surface 13 or the micro switch 12 need to have a very low spring constant, so as to ensure that the pressure on the teeth of the engagement elements 5, 6 is limited.

If the SMA wire 8 is inserted into a solid casing and fixed as well as contacted at one end, the other end can be contacted with the locking system in order to be driven.

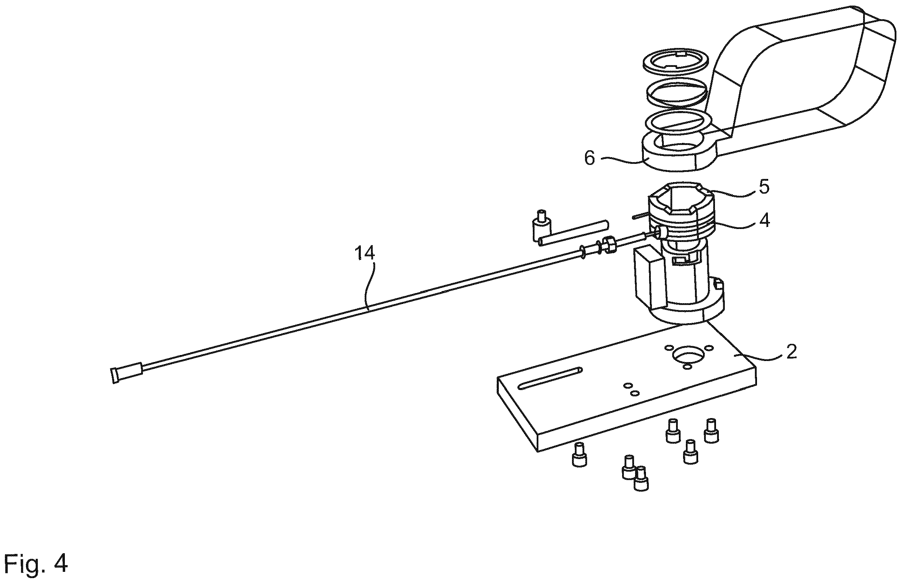

In an embodiment according to the invention, as shown in FIG 4, a Boden cable 14 is utilized instead of a drive motor 3. The Bowden cable 14 comprises an internal cable manufactured from a shape memory alloy and thus can be controlled by heating or cooling.

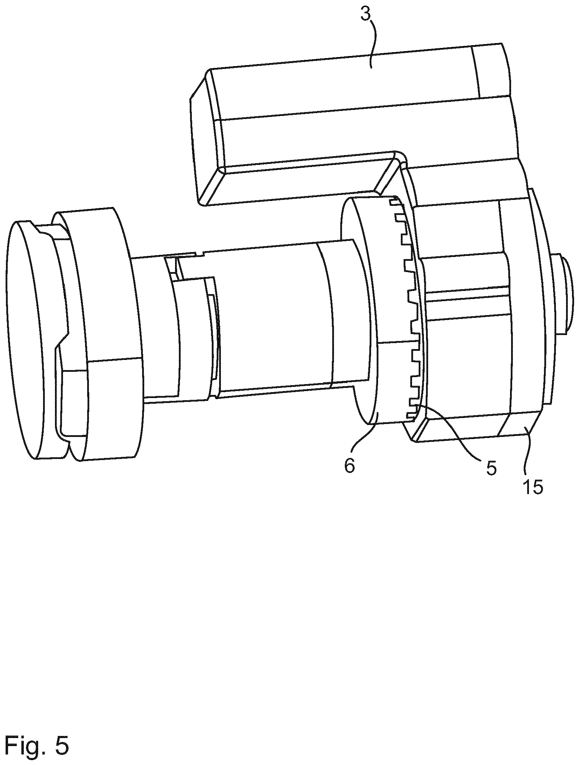

The Bowden cable 14 connects to the rotation part 4 and to a non-moving part of the vehicle, such as a door frame or the like. Since this embodiment neither needs a separate motor 3 or gearing 15, as shown in FIG 5, it is particularly compact.

The Bowden cable 14 can be routed together with electric cables supplying the rear view device 1 with current, usually through the base 2 of the rear view device 1 into the interior of the door.

The Bowden cable routing at the base 2 of the rear view device must be free of any sharp kinks.

Preferably, the inner cable has a diameter of 0.5 mm and a deflection radius of no more than 16 mm.

The basis for the definition of the behavior of such a SMA based Bowden cable 14 is provided by using a reversible temperature dependent martensitic phase transformation of the inner cable. As already mentioned above, in the case of NiTi-alloys, the high temperature phase is an austenite phase, while the low-temperature phase is martensitic. When measured in terms of the interatomic distances, the shear movements of the lattice and the corresponding displacements produced by the shearing are comparatively small. Although the crystal structure changes, the short-range order of the lattice is not disturbed, and the closest neighbors of each lattice point atom are retained. This behavior can be monitored by the measurement of the electrical resistance. Consequently, a control system can be designed in such a way that the resistance is never so low that a transformation takes place for as long as the locking mechanism is to be held open.

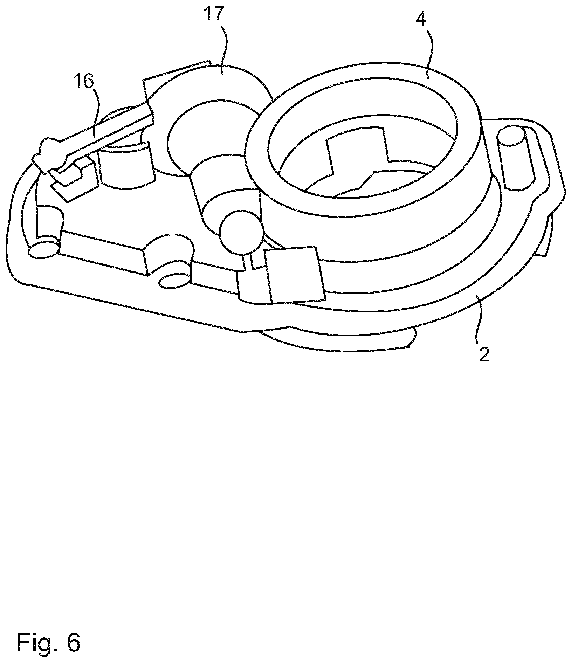

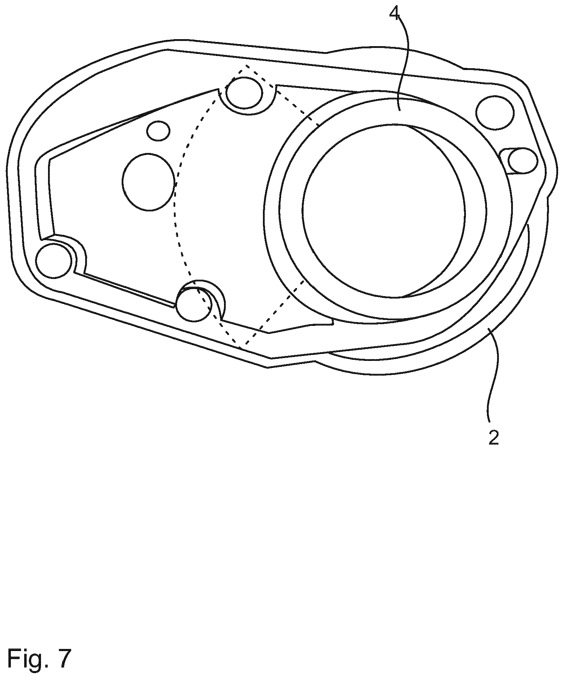

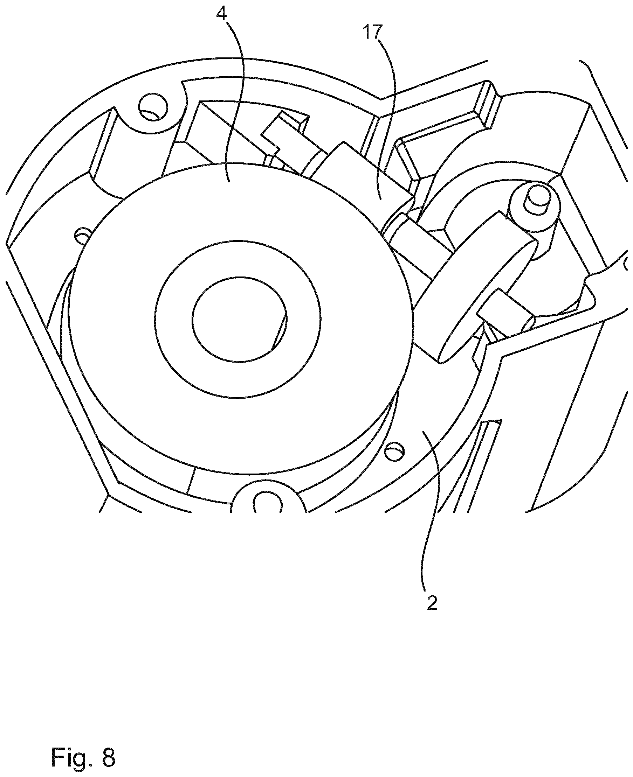

In further embodiments shown in FIGS 6 to 8, a piezo actuator 16 can be used instead of the drive motor 3. The piezo actuator 16 can contact the rotation element 4 via a gear element 17, see FIG 6. Alternatively, the rotation element 4 can be driven directly by the piezo actuator 16, as depicted in FIG 7. In the latter case, the diameter of the rotation element 4 may be increased as shown by the dashed outlines in FIG 7. The piezo actuator 16 is preferably driven with a frequency of about 1 kHz. Due to the resulting small step size, its speed can be very precisely adjusted by the applied driving frequency. FIG 8 depicts the possible application locations of the piezo actuator 16 in a perspective view.

### REFERENCE SIGNS LIST

- 1: mirror folding device
- 2: basic body
- 3: drive motor
- 4: rotation element
- 5, 6: engagement element
- 7: spring element
- 8: SMA wire
- 10: trapezoid protrusions
- 11: complementary recesses
- 12: micro switch
- 13: contact surface
- 14: Boden cable
- 15: gearing
- 16: piezo actuator
- 17: gear element

- 100: first step
- 101: second step
- 103, 104, 105: step sequence
- 106: next step

- AΦ: rotation axis
- ΔΦ: rotation angle
- ΔS: increasing

## Claims

1. A rear view element folding device (1) for a motor vehicle for approaching at least one rotational position of an element housing relative to an element foot than can be mounted on the motor vehicle, and for locking or unlocking at least one resting position of the element housing relative to the element foot, wherein
a first actuator (8) for a translation movement of a first engagement element (6) that is firmly connected to the element housing relative to a second engagement element (5) that is connected to the element foot along a rotation axis AΦ, wherein the first engagement element (6) and the second engagement element (5) in locking position, such as a locked resting position of the element housing, stand in a fixed engagement with each other and in an unlocking position, such as an unlocked resting position of the element housing, the engagement is released by a certain translation movement, and
a second, separate actuator (3 ,14, 16) for a rotational movement for rotating the first engagement element (6) relative to the second engagement element (5) around the rotation axis AΦ, wherein through a first rotational movement, a first rotation position of the element housing can be approached from the unlocked resting position, and through a second rotation movement of the element housing, which is counter to the first rotational movement, the unlocked resting position can be approached from the first rotational position, wherein the second actuator (3, 14, 16) comprises a Bowden cable (14) having an inner cable comprising at least one of an active material or a shaped memory alloy, wherein the inner cable connects the first engagement element to the element foot.

2. The rear view element folding device according to claim 1, wherein
at least one spring element (7) in the locking position applies a force onto the first and/or second engagement element (5, 6), and
the first actuator (8) moves the first or second engagement element (5, 6) against the force of the spring element (7) during the change from the locking position into the unlocking position, in particular with a lifting movement, wherein preferably, the first actuator (8) holds the unlocking position for a certain period of time.

3. The rear view element folding device according to claim 1 or 2, wherein
the first actuator (8) uses an active material, in particular as an SMA drive, piezo drive or a drive designed with an electroactive polymer, wherein preferably, the SMA drive uses at least one SMA element, in particular in the form of an SMA wire or an SMA spring, on which a current can be applied for the change from the locking position into the unlocking position, in particular in form of at least one current surge and/or over a certain period of time.

4. The rear view element folding device according to claim 3, wherein
the spring element (7) comprises a spiral spring, concentrically to which the SMA element(s) run, in particular in an evenly distributed manner, and/or each SMA element is shortened through heating when the current is applied, so that the spring element is compressed from a locking state into an unlocking state, while during the cooling of the SMA element, the spring element returns from the unlocking state, in particular automatically, into the locking state, and/or
the first actuator (8) can be adjusted depending on a first travel sensor (12) and/or by means of end switches, in particular mechanical end switches.

5. The rear view element folding device according to anyone of the preceding claims,
wherein
the first engagement element comprises at least one protrusion for engagement into a recess, which is preferably designed to be complementary to the protrusion (10), in the second engagement element and/or the second engagement element (5) comprises at least one protrusion (10) for engagement into a recess (11), preferably designed to be complementary to the protrusion in the first engagement element (6) wherein preferably, a plurality of protrusions is provided, and/or preferably, each protrusion comprises a trapezoid form in its profile, and/or preferably, the first engagement element comprises a first ring and the second engagement element comprises a second ring, wherein the rings are arranged concentrically to the rotation axis, and/or
the first engagement element is formed as a first gear ring and/or a first clamping element, brake element and/or latching element, and the second engagement element is formed as a second gear ring and/or a second clamping element, brake element and/or latching element.

6. The rear view element folding device according to anyone of the preceding claims,
wherein
the element foot comprises a basic body, in particular having a cylindrical form, or is firmly connected thereto,
the spring element (7) engages on the basic body and the second engagement element (5), and
the first actuator (8) engages on the basic body and the second engagement element (5), so that a locking device is provided in a cylindrical form, in particular a hollow cylindrical form.

7. The rear view element folding device according to anyone of the preceding claims,
wherein
a control or regulating device for the first and/or second actuator interacts with at least one sensor device, and/or the control or regulating device, the first actuator and/or the second actuator are arranged at least partially in the locking device, in particular in the hollow cylinder.

8. The rear view element folding device according to claim 7, wherein the at least one sensor device is a resistance sensor detecting an inner resistance of an SMA element of the first and/or second actuator.

9. The rear view element folding device according to claim 7, wherein the at least one sensor device comprises a micro switch and/or an electrical contact surface which is actuated when the first and second engagement element are engaged in the locking position.

10. The rear view element folding device according to claim 7, wherein
the sensor device comprises a first sensor for sensing a travel path of the first actuator, such as in the form of a resistance sensor, Hall effect sensor, temperature sensor or current sensor in combination with at least one stop,
a second sensor for sensing a travel path of the second actuator, such as in the form of rotation angle sensor or current sensor in combination with at least one stop, a third sensor for detecting obstacles in the area of the rear view element,
a fourth sensor for capturing vibrations, and/or a fifth sensor for capturing the road and/or driving motion.

11. The rear view element folding device according to anyone of the preceding claims
wherein
the rear view element (1) comprises at least one mirror element and/or a camera and/or a display.

12. The rear view element folding device according to anyone of the preceding claims,
wherein in the locking position, a form fit is provided between the first and second engagement element.

## Patentansprüche

1. Klappvorrichtung für ein Rückblickelement (1) für ein Kraftfahrzeug zum Annähern an mindestens eine Drehstellung eines Elementgehäuses relativ zu einem Elementfuß, der auf dem Kraftfahrzeug montiert werden kann, und zum Sperren oder Entsperren mindestens einer Ruhestellung des Elementgehäuses relativ zu dem Elementfuß, mit
einem ersten Aktuator (8) für eine Translationsbewegung eines ersten Eingriffselementes (6), der fest mit dem Elementgehäuse verbunden ist, relativ zu einem zweiten Eingriffselement (5), das mit dem Elementfuß verbunden ist, entlang einer Drehachse AΦ, wobei sich das erste Eingriffselement (6) und das zweite Eingriffselement (5) in einer Sperrstellung, wie zum Beispiel einer gesperrten Ruhestellung des Elementgehäuses, in einem festen Eingriff miteinander befinden und in einer Entsperrstellung, wie zum Beispiel einer entsperrten Ruhestellung des Elementgehäuses, der Eingriff durch eine gewisse Translationsbewegung gelöst wird, und
einem zweiten, separaten Aktuator (3, 14, 16) für eine Drehbewegung zum Drehen des ersten Eingriffselementes (6) relativ zu dem zweiten Eingriffselement (5) um die Drehachse AΦ, wobei durch eine erste Drehbewegung sich einer ersten Drehstellung des Elementgehäuses von der entsperrten Ruhestellung aus angenähert werden kann und durch eine zweite Drehbewegung des Elementgehäuses, die der ersten Drehbewegung entgegengesetzt ist, sich der entsperrten Ruhestellung von der ersten Drehstellung aus angenähert werden kann, wobei der zweite Aktuator (3, 14, 16) einen Bowdenzug (14) umfasst, der ein inneres Zugseil aufweist, das mindestens ein/e aus einem aktiven Material oder einer Formgedächtnislegierung umfasst, wobei das innere Zugseil das erste Eingriffselement mit dem Elementfuß verbindet.

2. Klappvorrichtung für ein Rückblickelement nach Anspruch 1, wobei
mindestens ein Federelement (7) in der Sperrstellung eine Kraft auf das erste und/oder das zweite Eingriffselement (5, 6) ausübt und
der erste Aktuator (8) während des Wechsels aus der Sperrstellung in die Entsperrstellung das erste oder das zweite Eingriffselement (5, 6) gegen die Kraft des Federelementes (7) insbesondere mit einer Hebebewegung bewegt, wobei vorzugsweise der erste Aktuator (8) die Entsperrstellung einen gewissen Zeitraum lang hält.

3. Klappvorrichtung für ein Rückblickelement nach Anspruch 1 oder 2, wobei
der erste Aktuator (8) ein aktives Material, insbesondere als einen FGL-Antrieb, einen Piezoantrieb oder einen mit einem elektroaktiven Polymer ausgestalteten Antrieb, verwendet, wobei vorzugsweise der FGL-Antrieb mindestens ein FGL-Element, insbesondere in Form eines FGL-Drahtes oder einer FGL-Feder, verwendet, an das zum Zwecke des Wechsels aus der Sperrstellung in die Entsperrstellung ein Strom angelegt werden kann, insbesondere in Form mindestens eines Stromstoßes und/oder über einen gewissen Zeitraum.

4. Klappvorrichtung für ein Rückblickelement nach Anspruch 3, wobei
das Federelement (7) eine Spiralfeder umfasst, zu der das/die FGL-Element/e konzentrisch, insbesondere gleichmäßig verteilt, verläuft/verlaufen, und/oder jedes FGL-Element bei angelegtem Strom durch Erwärmen verkürzt wird, so dass das Federelement aus einem Sperrzustand in einen Entsperrzustand zusammengedrückt wird, wohingegen während des Abkühlens des FGL-Elementes das Federelement aus dem Entsperrzustand in den Sperrzustand, insbesondere automatisch, zurückkehrt und/oder
der erste Aktuator (8) in Abhängigkeit von einem ersten Wegsensor (12) und/oder mittels Endschalter, insbesondere mechanischer Endschalter, eingestellt werden kann.

5. Klappvorrichtung für ein Rückblickelement nach einem der vorangehenden Ansprüche, wobei
das erste Eingriffselement mindestens einen Vorsprung zum Eingriff in eine Vertiefung umfasst, der vorzugsweise so ausgestaltet ist, das er komplementär zu dem Vorsprung (10) in dem zweiten Eingriffselement ist, und/oder das zweite Eingriffselement (5) mindestens einen Vorsprung (10) zum Eingriff in eine Vertiefung (11) umfasst, der vorzugsweise so ausgestaltet ist, das er komplementär zu dem Vorsprung in dem ersten Eingriffselement (6) ist, wobei vorzugsweise eine Mehrzahl von Vorsprüngen vorgesehen ist und/oder vorzugsweise jeder Vorsprung eine Trapezform in seinem Profil umfasst und/oder vorzugsweise das erste Eingriffselement einen ersten Ring umfasst und das zweite Eingriffselement einen zweiten Ring umfasst, wobei die Ringe konzentrisch zu der Drehachse angeordnet sind, und/oder das erste Eingriffselement als ein erster Zahnkranz und/oder ein erstes Klemmelement, Bremselement und/oder Einklinkelement ausgebildet ist und das zweite Eingriffselement als ein zweiter Zahnkranz und/oder ein zweites Klemmelement, Bremselement und/oder Einklinkelement ausgebildet ist.

6. Klappvorrichtung für ein Rückblickelement nach einem der vorangehenden Ansprüche, wobei
der Elementfuß einen Grundkörper umfasst, insbesondere mit einer zylindrischen Form, oder fest damit verbunden ist,
das Federelement (7) in den Grundkörper und das zweite Eingriffselement (5) eingreift und
der erste Aktuator (8) in den Grundkörper und das zweite Eingriffselement (5) eingreift, so dass eine Sperrvorrichtung in einer zylindrischen Form, insbesondere einer hohlzylindrischen Form, vorgesehen ist.

7. Klappvorrichtung für ein Rückblickelement nach einem der vorangehenden Ansprüche, wobei
eine Steuer- oder Regelvorrichtung für das erste und/oder der zweite Aktuator mit mindestens einer Sensorvorrichtung interagiert und/oder die Steuer- oder Regelvorrichtung, der erste Aktuator und/oder der zweite Aktuator zumindest teilweise in der Sperrvorrichtung, insbesondere in dem Hohlzylinder, angeordnet sind.

8. Klappvorrichtung für ein Rückblickelement nach Anspruch 7, wobei die mindestens eine Sensorvorrichtung ein Widerstandssensor ist, der einen Innenwiderstand eines FGL-Elementes des ersten und/oder des zweiten Aktuators detektiert.

9. Klappvorrichtung für ein Rückblickelement nach Anspruch 7, wobei die mindestens eine Sensorvorrichtung einen Mikroschalter und/oder eine elektrische Kontaktfläche umfasst, der/die betätigt wird, wenn sich das erste und das zweite Eingriffselement in der Sperrstellung in Eingriff befinden.

10. Klappvorrichtung für ein Rückblickelement nach Anspruch 7, wobei
die Sensorvorrichtung umfasst: einen ersten Sensor zum Erfassen eines Laufweges des ersten Aktuators, wie zum Beispiel in Form eines Widerstandssensors, Halleffektsensors, Temperatursensors oder Stromsensors in Kombination mit mindestens einem Anschlag,
einen zweiten Sensor zum Erfassen eines Laufweges des zweiten Aktuators, wie zum Beispiel in Form eines Drehwinkelsensors oder Stromsensors in Kombination mit mindestens einem Anschlag, einen dritten Sensor zum Detektieren von Hindernissen im Bereich des Rückblickelementes,
einen vierten Sensor zum Erfassen von Schwingungen und/oder einen fünften Sensor zum Erfassen der Straße und/oder der Fahrbewegung.

11. Klappvorrichtung für ein Rückblickelement nach einem der vorangehenden Ansprüche, wobei das Rückblickelement (1) mindestens ein Spiegelelement und/oder eine Kamera und/oder eine Anzeige umfasst.

12. Klappvorrichtung für ein Rückblickelement nach einem der vorangehenden Ansprüche, wobei in der Sperrstellung ein Formschluss zwischen dem ersten und dem zweiten Eingriffselement vorgesehen ist.

## Revendications

1. Dispositif de pliage d'un élément de vue arrière (1) pour un véhicule à moteur pour approcher au moins une position de rotation d'un boîtier d'élément par rapport à un pied d'élément qui peut être monté sur le véhicule à moteur, et pour verrouiller ou déverrouiller au moins une position de repos du boîtier d'élément par rapport au pied d'élément, avec
un premier actionneur (8) pour un mouvement de translation d'un premier élément d'engagement (6) qui est fermement connecté au boîtier d'élément par rapport à un deuxième élément d'engagement (5) qui est connecté au pied d'élément le long d'un axe de rotation AΦ, le premier élément d'engagement (6) et le deuxième élément d'engagement (5) en position de verrouillage, telle qu'une position de repos verrouillée du boîtier d'élément, étant accouplés de manière fixe l'un avec l'autre et, dans une position de déverrouillage, telle qu'une position de repos déverrouillée du boîtier d'élément, l'engagement étant relâché par un certain mouvement de translation, et
un deuxième actionneur séparé (3 ,14, 16) pour un mouvement de rotation pour la rotation du premier élément d'engagement (6) par rapport au deuxième élément d'engagement (5) autour de l'axe de rotation AΦ, par un premier mouvement de rotation, une première position de rotation du boîtier d'élément pouvant être approchée à partir de la position de repos déverrouillée et, par un deuxième mouvement de rotation du boîtier d'élément, qui est opposé au premier mouvement de rotation, la position de repos déverrouillée pouvant être approchée à partir de la première position de rotation, le deuxième actionneur (3, 14, 16) comprenant un câble de Bowden (14) contenant un câble intérieur comprenant un matériau actif et/ou un alliage à mémoire de forme, le câble intérieur connectant le premier élément d'engagement avec le pied d'élément.

2. Dispositif de pliage d'un élément de vue arrière selon la revendication 1, dans lequel
au moins un élément ressort (7) dans la position de verrouillage applique une force sur le premier et/ou le deuxième élément d'engagement (5, 6), et
le premier actionneur (8) déplace le premier ou le deuxième élément d'engagement (5, 6) contre la force de l'élément ressort (7) pendant le changement depuis la position de verrouillage en la position de déverrouillage, en particulier avec un mouvement de soulèvement, le premier actionneur (8) maintenant de préférence la position de déverrouillage pendant une certaine période de temps.

3. Dispositif de pliage d'un élément de vue arrière selon la revendication 1 ou 2, dans lequel
le premier actionneur (8) utilise un matériau actif, en particulier en tant qu'entraînement AMF, entraînement piézoélectrique ou un entraînement conçu avec un polymère électroactif, l'entraînement AMF utilisant de préférence au moins un élément AMF, en particulier sous la forme d'un fil AMF ou d'un ressort AMF, auquel un courant peut être appliqué pour le changement depuis la position de verrouillage en la position de déverrouillage, en particulier sous la forme d'au moins une pointe de courant et/ou pendant une certaine période de temps.

4. Dispositif de pliage d'un élément de vue arrière selon la revendication 3, dans lequel
l'élément ressort (7) comprend un ressort en spirale, par rapport auquel le ou les éléments AMF sont concentriques, en particulier d'une manière distribuée de façon uniforme, et/ou chaque élément AMF est raccourci par chauffage lorsque le courant est appliqué, de telle sorte que l'élément ressort soit comprimé depuis un état de verrouillage en un état de déverrouillage, tandis que pendant le refroidissement de l'élément AMF, l'élément ressort retourne depuis l'état de déverrouillage, en particulier automatiquement, vers l'état de verrouillage, et/ou
le premier actionneur (8) peut être ajusté en fonction d'un premier capteur de déplacement (12) et/ou au moyen d'interrupteurs d'extrémité, en particulier d'interrupteurs d'extrémité mécaniques.

5. Dispositif de pliage d'un élément de vue arrière selon l'une quelconque des revendications précédentes, dans lequel
le premier élément d'engagement comprend au moins une protubérance pour l'engagement dans un retrait, qui est de préférence conçu pour être complémentaire de la protubérance (10), dans le deuxième élément d'engagement, et/ou le deuxième élément d'engagement (5) comprend au moins une protubérance (10) pour l'engagement dans un retrait (11), de préférence conçu pour être complémentaire de la protubérance, dans le premier élément d'engagement (6),
une pluralité de protubérances étant de préférence prévues et/ou chaque protubérance comprenant de préférence une forme trapézoïdale dans son profilé, et/ou le premier élément d'engagement comprenant de préférence un premier anneau et le deuxième élément d'engagement comprenant un deuxième anneau, les anneaux étant agencés concentriquement par rapport à l'axe de rotation, et/ou le premier élément d'engagement étant formé sous la forme d'une première couronne dentée et/ou d'un premier élément de serrage, élément de frein et/ou élément de loquet, et le deuxième élément d'engagement étant formé sous la forme d'une deuxième couronne dentée et/ou d'un deuxième élément de serrage, élément de frein et/ou élément de loquet.

6. Dispositif de pliage d'un élément de vue arrière selon l'une quelconque des revendications précédentes, dans lequel
le pied d'élément comprend un corps de base, en particulier ayant une forme cylindrique, ou est fermement connecté à celui-ci,
l'élément ressort (7) s'engage sur le corps de base et le deuxième élément d'engagement (5), et
le premier actionneur (8) s'engage sur le corps de base et le deuxième élément d'engagement (5), de manière à obtenir un dispositif de verrouillage d'une forme cylindrique, en particulier d'une forme cylindrique creuse.

7. Dispositif de pliage d'un élément de vue arrière selon l'une quelconque des revendications précédentes, dans lequel
un dispositif de contrôle ou de régulation pour le premier et/ou le deuxième actionneur interagit avec au moins un dispositif de capteur, et/ou le dispositif de contrôle ou de régulation, le premier actionneur et/ou le deuxième actionneur sont agencés au moins partiellement dans le dispositif de verrouillage, en particulier dans le cylindre creux.

8. Dispositif de pliage d'un élément de vue arrière selon la revendication 7, dans lequel ledit au moins un dispositif de capteur est un capteur de résistance détectant une résistance intérieure d'un élément AMF du premier et/ou deuxième actionneur.

9. Dispositif de pliage d'un élément de vue arrière selon la revendication 7, dans lequel ledit au moins un dispositif de capteur comprend un micro-interrupteur et/ou une surface de contact électrique qui est actionnée lorsque le premier et le deuxième élément d'engagement sont accouplés dans la position de verrouillage.

10. Dispositif de pliage d'un élément de vue arrière selon la revendication 7, dans lequel
le dispositif de capteur comprend un premier capteur pour la détection d'un trajet de mouvement de déplacement du premier actionneur, tel que sous la forme d'un capteur de résistance, d'un capteur à effet de Hall, d'un capteur de température ou d'un capteur de courant en combinaison avec au moins un arrêt,
un deuxième capteur pour détecter un trajet de déplacement du deuxième actionneur, tel que sous la forme d'un capteur d'angle de rotation ou d'un capteur de courant en combinaison avec au moins un arrêt, un troisième capteur pour détecter des obstacles dans la zone de l'élément de vue arrière,
un quatrième capteur pour capturer des vibrations et/ou un cinquième capteur pour capturer la route et/ou un mouvement de conduite.

11. Dispositif de pliage d'un élément de vue arrière selon l'une quelconque des revendications précédentes, dans lequel
l'élément de vue arrière (1) comprend au moins un élément miroir et/ou une caméra et/ou un affichage.

12. Dispositif de pliage d'un élément de vue arrière selon l'une quelconque des revendications précédentes, dans lequel, dans la position de verrouillage, une concordance de forme est prévue entre le premier et le deuxième élément d'engagement.
